# EUROPÄISCHE PATENTSCHRIFT

(11) **EP 1 682 638 B1**
(45) Veröffentlichungstag und Bekanntmachung des Hinweises auf die Patenterteilung: **15.05.2019**
(21) Anmeldenummer: 04797633.7
(22) Anmeldetag: 05.11.2004
(51) Int. Cl.: C10G 70/06, C10L 3/10, B01D 53/14

(54) **VERFAHREN ZUR GEWINNUNG EINES UNTER HOHEM DRUCK STEHENDEN SAUERGASSTROMS DURCH ENTFERNUNG DER SAUERGASE AUS EINEM FLUIDSTROM**
METHOD FOR OBTAINING A HIGH PRESSURE ACID GAS STREAM BY REMOVAL OF THE ACID GASES FROM A LIQUID STREAM
PROCEDE D'EXTRACTION D'UN FLUX DE GAZ ACIDE SOUS HAUTE PRESSION PAR EXTRACTION DES GAZ ACIDES CONTENUS DANS UN FLUX FLUIDIQUE

(30) Priorität: 10.11.2003 DE 10352878; 25.06.2004 DE 102004031051; 18.10.2004 DE 102004050936
(43) Veröffentlichungstag der Anmeldung: 26.07.2006
(73) Patentinhaber: BASF SE, 67056 Ludwigshafen am Rhein (DE)
(72) Erfinder: KATZ, Torsten, 67434 Neustadt (DE); ASPRION, Norbert, 68163 Mannheim (DE)
(74) Vertreter: BASF IP Association
(86) Internationale Anmeldenummer: PCT/EP2004/012512
(87) Internationale Veröffentlichungsnummer: WO 2005/044955

(56) Entgegenhaltungen:
- WO-A-03/092862
- WO-A-2004/071624
- WO-A-2004/082809
- WO-A-2004/085036
- US-A- 4 085 192
- US-A- 4 498 911
- US-A- 4 853 012
- US-A- 5 853 680

## Beschreibung

Die vorliegende Erfindung betrifft ein Verfahren zur Gewinnung eines unter hohem Druck stehenden Sauergasstroms durch Entfernung der Sauergase aus einem Fluidstrom.

In zahlreichen Prozessen in der chemischen Industrie treten Fluidströme auf, die Sauergase, wie z.B. CO₂, H₂S, SO₂, CS₂, HCN, COS oder Mercaptane als Verunreinigungen enthalten. Bei diesen Fluidströmen kann es sich beispielsweise um Gasströme wie Erdgas, Raffineriegas oder Reaktionsgase handeln, die bei der Oxidation organischer Materialien, wie beispielsweise organische Abfälle Kohle oder Erdöl, oder bei der Kompostierung organischer Substanzen enthaltender Abfallstoffe entstehen.

Die Entfernung der Sauergase ist aus unterschiedlichen Gründen von besonderer Bedeutung. Beispielsweise muss der Gehalt an Schwefelverbindungen von Erdgas durch geeignete Aufbereitungsmaßnahmen unmittelbar an der Erdgasquelle reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Die bei der Oxidation organischer Materialien, wie beispielsweise organische Abfälle, Kohle oder Erdöl, oder bei der Kompostierung organischer Substanzen enthaltender Abfallstoffe entstehenden Reaktionsgase müssen entfernt werden, um die Emission von Gasen, die die Natur schädigen oder das Klima beeinflussen können, zu verhindern.

Zu den in Gaswäscheverfahren eingesetzten Waschlösungen existiert auch eine umfangreiche Patentliteratur.

US 4,498,911 beschreibt ein Verfahren zur selektiven Abtrennung von H₂S aus einem CO₂-Strom durch Absorption des H₂S in einem physikalischen Lösungsmittel und nachfolgender Regeneration des mit H₂S beladenem Lösungsmittels sowie anschließender Rückführung des regenerierten Lösungsmittels.

US 5,853,680 beschreibt ein Verfahren zur Entfernung von CO₂ aus einem Erdgas durch Absorption in einem flüssigen Absorptionsmittel, anschließender Regeneration des mit CO₂ beladenem Lösungsmittels durch Erhitzung ohne Herabsetzung des Druckes sowie anschließender Rückführung des regenerierten Lösungsmittels.

US 4,853,012 offenbart ein Verfahren zur Deacidifizierung eines Merkaptane und andere Sauergase enthaltenden Gases durch Absorption der Sauergase in einem Absorptionsmittel in einer Absorptionszone mit nachfolgender Regeneration des beladenen Absorptionsmittels in einer Regenerationszone bei einem Druck zwischen 1 und 5 bar unter Rückführung des regenerierten Absorptionsmittels und gegenseitigem Wärmeaustausch des Stroms zur Regenerationszone und des Stroms zur Absorptionszone.

Grundsätzlich kann man dabei zwei unterschiedlichen Typen von Absorptions- bzw. Lösungsmitteln für die Gaswäsche unterscheiden:
Zum einen werden sog. physikalische Lösungsmittel eingesetzt, in denen nach erfolgter Absorption die gelösten Sauergase in molekularer Form vorliegen. Typische physikalische Lösungsmittel sind Cyclotetramethylensulfon (Sulfolan) und dessen Derivate, aliphatische Säureamide (Acetylmorpholin, N-Formylmorpholin), NMP (N-Methylpyrrolidon), Propylencarbonat, N-alkylierte Pyrrolidone und entsprechende Piperidone, Methanol und Gemische aus Dialkylethern von Polyethylenglykolen (Selexol®, Union Carbide, Danbury, Conn., USA).

Zum anderen werden chemische Lösungsmittel eingesetzt, deren Wirkungsweise auf chemischen Reaktionen beruht, bei denen nach erfolgter Absorption die gelösten Sauergase in Form chemischer Verbindungen vorliegen. Beispielsweise werden bei den im industriellen Maßstab am häufigsten als chemische Lösungsmittel eingesetzten wässrigen Lösungen aus anorganischen Basen (z.B. Pottaschelösung im Benfield-Prozess) oder organischen Basen (z.B. Alkanolamine) beim Lösen von Sauergasen Ionen gebildet.

Das Lösungsmittel kann durch Membranverfahren, Erhitzen, Entspannen auf einen niedrigeren Druck oder Strippen regeneriert werden, wobei die ionischen Spezies zu Sauergasen zurück reagieren und/oder mittels Dampf abgestrippt werden. Nach dem Regenerationsprozess kann das Lösungsmittel wiederverwendet werden.

Zuweilen ist es nicht erwünscht, die entfernten Sauergase einfach in die Atmosphäre zu leiten, sondern sie werden anderweitig genutzt oder entsorgt. Dies ist z.B. bei der Enhanced Oil Recovery der Fall. Hier wird das komprimierte Sauergas durch Verpressen in Erdöllagerstätten dazu genutzt, die technisch gewinnbare Erdölmenge des Feldes zu erhöhen. Selbst wenn das Sauergas nicht zur verbesserten Ausbeutung von Erdöllagerstätten genutzt wird, kann es aus Gründen des Klimaschutzes sinnvoll sein, das Sauergas in unterirdische Lagerstätten zu pressen oder in tiefe Wasserschichten in offenen Gewässern zu lösen.

Für diese Art der Weiterverwendung oder Entsorgung ist es erforderlich, dass die Sauergase ein Druckniveau aufweisen, das oberhalb des Normaldrucks liegt.

Aus der EP-A-768365 und US-A-5853680 ist es bekannt, aus unter einem Druck von 30 bar und mehr stehendem Erdgas, das CO₂ als Sauergas enthält, das CO₂ so zu separieren, dass das CO₂ anschließend auf einem Druckniveau von 10 bar vorliegt. Hierzu wird das behandlungsbedürftige Erdgas mit einer Absorptionsflüssigkeit, z.B. oganischen Aminen wie Methyldiethanolamin in Kontakt gebracht. Ein Verfahren zur Entfernung des CO₂ aus Erdgas, bei dem das CO₂ anschließend auf einem relativ hohen Druckniveau belassen wird, arbeitet energetisch ungünstiger als ein Verfahren, bei dem das CO₂ auf Normaldruck entspannt wird. Der Grund hierfür ist darin zu sehen, dass die Regenerierung der mit CO₂ beladenen Absorptionsflüssigkeit, d.h. das Austreiben des CO₂, im Allgemeinen auf die Weise geschieht, dass die Absorptionsflüssigkeit entspannt und gleichzeitig oder anschließend aufgeheizt wird. Je niedriger nun das Druckniveau bei der Entspannung der beladenen Absorptionsflüssigkeit, gewählt werden kann, desto weniger Wärmenergie muss beim anschließenden Aufheizen aufgewendet werden, um eine regenerierte Absorptionsflüssigkeit mit einem definierten Restgehalt an CO₂ zu erhalten.

Vor diesem Hintergrund steht stehen einem Durchschnittsfachmann, der vor der Aufgabe steht, ein Sauergas auf einem hohem Druckniveau bereitzustellen, das er durch Regenerierung einer mit dem Sauergas beladenen Absorptionsflüssigkeit gewinnt, 2 Alternativen zur Verfügung. Bei der ersten Alternative geht er vor wie in den beiden vorgenannten Schutzrechten beschrieben. Bei der zweiten Alternative entspannt er die mit dem Sauergas beladene Absorptionsflüssigkeit bis auf Normaldruck und erhöht anschließend das Druckniveau der benötigten Sauergasmenge wieder mittels üblicher Verfahren, z.B. durch einen Kompressor. Welche dieser beiden Alternativen unter energetischen Aspekten die günstigere ist, hängt von vielerlei Randbedingungen ab. Bei der 1. Alternative muss er aus den oben beschriebenen Gründen bei der Regenerierung der Absorptionsflüssigkeit zusätzlich Energie aufwenden. Bei der 2. Alternative wird zwar für die Regenerierung der Absorptionsflüssigkeit weniger Energie benötigt, zusätzliche Energie ist jedoch zum Betreiben der Kompressoren aufzuwenden.

Aufgabe der vorliegenden Erfindung war es somit, ein wirtschaftliches Verfahren bereitzustellen, mit dem es möglich ist, Fluidströme von den darin als Verunreinigungen enthaltenen H2S-haltigen Sauergasen zu befreien und die Sauergasströme auf einem hohen Druckniveau bereitzustellen.

Demgemäß wurde ein Verfahren gefunden zur Gewinnung eines unter einem Druck von 5 bis 30 bar stehenden Sauergasstroms durch Entfernung der Sauergase aus einem Fluidstrom, der H2S als Sauergas und ggf. andere Sauergase als Verunreinigungen enthält, wobei der molare Anteil an H₂S, bezogen auf die Gesamtmenge an Sauergasen mindestens 50 mol-% beträgt, indem man
a) man in wenigstens einem Absorptionsschritt den Fluidstrom mit einem flüssigen Absorptionsmittel ausgewählt aus der Gruppe bestehend aus
   - Lösungen bestehend hauptsächlich aus aliphatischen oder cycloaliphatischen Aminen mit 2 bis 12 Kohlenstoffatomen, Alkanolaminen mit 2 bis 12 Kohlenstoffatomen, cyclischen Aminen, bei denen 1 oder 2 Stickstoffatome zusammen mit 1 oder 2 Alkandiylgruppen 5-, 6- oder 7- gliedrige Ringe bilden, Mischungen der vorstehenden Lösungen, wässrige Lösungen der vorstehenden Mischungen und Lösungen,
   - wässrige Lösungen enthaltend Salze von Aminosäuren- wässrige Pottaschelösungen, die ggf. Piperazin oder Monoethanolamin (MEA) enthalten
   - wässrige NaOH-Lauge oder Kalkmilch
   in innigen Kontakt bringt und so einen von Sauergasen weitgehend gereinigten Fluidstrom und ein mit Sauergasen beladenes flüssiges Absorptionsmittel erzeugt (Schritt a),
b) den von Sauergasen weitgehend gereinigten Fluidstrom und das mit Sauergasen beladene flüssige Absorptionsmittel voneinander trennt (Schritt b),
c) das mit Sauergasen beladene flüssige Absorptionsmittel durch Aufheizen und ggf. Entspannen oder Strippen in einen Sauergasstrom mit einem Druck von 5 bis 30 bar und ein regeneriertes flüssiges Absorptionsmittel auftrennt (Schritt c),
d) das regenerierte flüssige Absorptionsmittel in einen Wärmetauscher führt und dort abkühlt, indem man mit einem Teil seiner Wärmeenergie das mit Sauergasen beladene flüssige Absorptionsmittel in Schritt (c) aufheizt (Schritt d),
e) das regenerierte flüssige Absorptionsmittel in Schritt a) zurückführt (Schritt e).

Das erfindungsgemäße Absorptionsmittel bzw. das erfindungsgemäße Verfahren ist zur Entfernung von Sauergasen aus Fluidströmen geeignet, die mindestens 50, bevorzugt mindestens 75 mol-% H₂S, bezogen auf die Gesamtmenge an Sauergasen im Fluidstrom, enthalten. Bei den anderen Sauergasen handelt es sich insbesondere um CO₂, COS, Mercaptane, SO₃, SO₂, CS₂ und HCN. Besonders günstig liegt der Anteil von CO₂ an den sonstigen Sauergasen bei mindestens 50 mol-%.

Fluide, welche die Sauergase enthalten, enthalten neben den Saugasen inerte Bestandteile, d.h. solche innerte Gas- und Flüssigkeitsbestandteile, die von den Absorptionsmittel nicht oder nicht in nennenswertem Umfang absorbiert werden. Bei den Fluiden handelt es einerseits um Gase, wie Erdgas, Synthesegas, Koksofengas, Kohlevergasungsgas, Kreisgas und Verbrennungsgase und andererseits mit dem Absorptionsmittel im Wesentlichen nicht mischbare Flüssigkeiten, wie LPG (Liquefied Petroleum Gas) oder NGL (Natural Gas Liquids). Beispiele für inerte Bestandteile sind leichtflüchtige Kohlenwasserstoffe, bevorzugt C₁- bis C₄-Kohlenwasserstoffe, z.B. Methan, ferner Stickstoff und Wasserstoff.

Der behandlungsbedürftige Fluidstrom steht im Allgemeinen unter einem Druck von 1 bis 200 bar bevorzugt 3 bis 150 bar, besonders bevorzugt 10 bis 100 bar.

Als Absorptionsmittel eignen sich praktisch alle üblichen Absorptionsmittel.

Bevorzugte Absorptionsmittel sind z.B. chemische Lösungsmittel ausgewählt aus der Gruppe bestehend aus
- Lösungen bestehend hauptsächlich aus aliphatischen oder cycloaliphatischen Aminen mit 2 bis 12 Kohlenstoffatomen, Alkanolaminen mit 2 bis 12 Kohlenstoffatomen, cyclischen Aminen bei denen 1 oder 2 Stickstoffatome zusammen mit 1 oder 2 Alkandiylgruppen 5-, 6- oder 7-gliedrige Ringe bilden, Mischungen der vorstehenden Lösungen, wässrige Lösungen der vorstehenden Mischungen und Lösungen,
- wässrige Lösungen enthaltend Salze von Aminosäuren
- wässrige Pottaschelösungen, die ggf. Piperazin oder Methylethanolamin enthalten
- wässrige NaOH-Lauge oder Kalkmilch.

Besonders bevorzugt werden als chemisches Lösungsmittel Lösungen, bestehend hauptsächlich aus 3-Dimethylamino-1-propanol (DIMAP), N,N,N',N'-Tetramethyl-1,3-propandiamin (TMPDA), Monoethanolamin (MEA), Diethanolamin (DEA), Triethanolamin (TEA), Diethylethanolamin (DEEA), Diisopropylamin (DIPA), Aminoethoxyethanol (AEE) und Methyldiethanolamin (MDEA) Mischungen der vorstehenden Lösungen und wässrige Lösungen der vorstehenden Mischungen und Lösungen, eingesetzt.

Ganz besonders bewährt hat sich das in dem US-Patent US 4,336,233 beschriebene Absorptionsmittel. Es handelt sich dabei um eine wässrige Lösung von Methyldiethanolamin (MDEA) und Piperazin als Absorptionsbeschleuniger oder Aktivator. Die dort beschriebene Waschflüssigkeit enthält 1,5 bis 4,5 mol/l Methyldiethanolamin (MDEA) und 0,05 bis 0,8 mol/l, bevorzugt bis zu 0,4 mol/l Piperazin.

Bezüglich weiterer bevorzugter chemischer Lösungsmittel wird Bezug genommen auf DE-A-10306254, DE-A-10210729, DE-A-10139453, und EP-A-1303345.

Das an sauren Gasbestandteilen reiche Ausgangsgas (Rohgas) wird in einem Absorptionsschritt in einem Absorber in Kontakt mit dem erfindungsgemäßen Absorptionsmittel gebracht, wodurch die sauren Gasbestandteile zumindest teilweise ausgewaschen werden.

Als Absorber fungiert vorzugsweise eine in üblichen Gaswäsche-Verfahren eingesetzte Waschvorrichtung. Geeignete Waschvorrichtungen sind beispielsweise Füllkörper, Packungs- und Bodenkolonnen, Radialstromwäscher, Strahlwäscher, Venturi-Wäscher und Rotations-Sprühwäscher, bevorzugt Packungs-, Füllkörper- und Bodenkolonnen, besonders bevorzugt Packungs- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist.

Das erfindungsgemäße Verfahren kann einen oder mehrere, insbesondere zwei, aufeinanderfolgende Absorptionsschritte umfassen. Die Absorption kann in mehreren aufeinanderfolgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird.

Gemäß einer bevorzugten Ausführungsform wird das erfindungsgemäße Verfahren so durchgeführt, dass das die sauren Gase enthaltende Fluid in einem Absorptionsschritt mit dem flüssigen Absorptionsmittel bei einer Temperatur von 30 bis 100°C, bevorzugt 40 bis 90°C und insbesondere 50 bis 80°C behandelt wird. Der Gesamtdruck beträgt im Absorptionsschritt bevorzugt 3 bis 150 bar, besonders bevorzugt 10 bis 100, im Allgemeinen 1 bis 200 bar.

Aus dem mit den sauren Gasbestandteilen beladenen Absorptionsmittel können die sauren Gasbestandteile in üblicher Weise (analog zu den nachfolgend zitierten Publikationen) in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Bevorzugt beinhaltet der Regenerationsschritt Schritt (c) noch vor der Aufheizung eine vorgeschaltete Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537,753 und US 4,553,984.

Falls bei dieser Druckentspannung das flüssige Absorptionsmittel auf einen Druck entspannt wird, der unterhalb des gewünschten Drucks des gemäß Schritt (c) abgetrennten Sauergases liegt, wird der Druck des flüssigen Absorptionsmittel anschließend, d.h. noch vor dem Aufheizen, bevorzugt mittels einer Pumpe entsprechend erhöht.

Die Erhöhung des Drucks des beladenen flüssigen Absorptionsmittels auf mindestens den Druck, den das Sauergas in Schritt (c) haben soll, ist selbstverständlich auch dann erforderlich, wenn keine vorgeschaltete Druckentspannung vorgenommen wird und der Druck, bei dem die Absorption (Schritt (a)) vorgenommen wird niedriger ist als der Druck, auf den das Sauergas in Schritt (c) gebracht wird.

Die Freisetzung der sauren Gasbestandteile im mittels Aufheizen durchgeführten Regenerationsschritt wird im Allgemeinen in einer Kolonne, beispielsweise in einer Entspannungskolonne, z.B. einem senkrecht oder waagerecht eingebauten Flash-Behälter oder einer Gegenstromkolonne mit Einbauten, erfolgen. Es können mehrere Entspannungskolonnen hintereinandergeschaltet werden, in denen bei unterschiedlichen Drücken regeneriert wird. Beispielsweise kann in einer Vorentspannungskolonne bei hohem Druck, der typischerweise ca. 1,5 bar oberhalb des Partialdrucks der sauren Gasbestandteile im Absorptionsschritt liegt, und in einer Hauptentspannungskolonne bei einem Druck von 5 bis 30 bar, regeneriert werden. Die Untergrenze des Druckbereichs liegt bei 5 bar. Die Obergrenze des bevorzugten Druckbereichs liegt bevorzugt bei 20, besonders bevorzugt bei 10 bar.

Im Regenerationsschritt wird das beladene flüssige Absorptionsmittel auf zweierlei Weise aufgeheizt. Zum einen wird ihm von Extern Wärmeenergie zugeführt. Zum anderen erfolgt das Aufheizen durch Wärmetausch mit dem im Regenerationsschritt erzeugten regenerierten flüssigen Absorptionsmittel.

Die Zuführung der Wärme von Extern kann z.B. so erfolgen, dass in der Kolonne, in der die Aufheizung und ggf. zusätzlich die Entspannung oder das Strippen vorgenommen wird, das sich im Kolonnensumpf sammelnde regenerierte flüssige Absorptionsmittel aufgekocht wird. Dies geschieht bevorzugt, indem man vom Kolonnensumpf einen Strom des regenerierten flüssigen Absorptionsmittels abzieht, in einen Aufkocher führt und von dort in den Kolonnensumpf zurückleitet.

Die Regeneration kann durch Entspannung oder Strippen zusätzlich unterstützt werden.

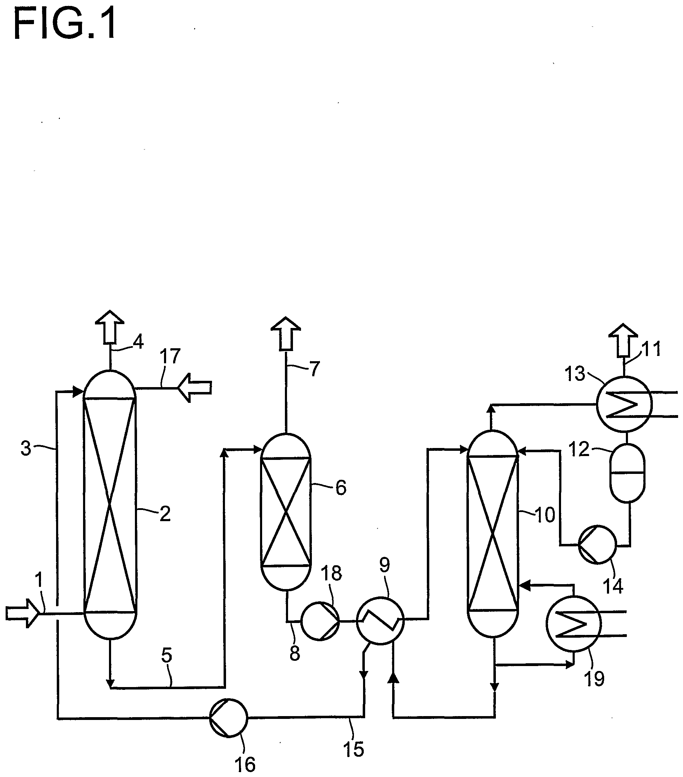

Das erfindungsgemäße Verfahren wird nachfolgend anhand der Figur 1 erläutert.

In Figur 1 ist schematisch eine Vorrichtung dargestellt, bei der die Absorptionsstufe einstufig und die Entspannungsstufe zweistufig durchgeführt werden. Das Ausgangsgas (nachfolgend auch als Feedgas bezeichnet) wird über Leitung 1 in den unteren Bereich des Absorbers 2 eingespeist. Beim Absorber 2 handelt es sich um eine Kolonne, die mit Füllkörpern gepackt ist, um den Massen- und Wärmeaustausch zu bewirken. Alternativ kann die Kolonne auch als Glocken-, Ventil- oder Siebboden-Kolonne ausgeführt sein. Das Absorptionsmittel, bei dem es sich um regeneriertes Absorptionsmittel mit einem geringen Restgehalt an sauren Gasen handelt, wird über die Leitung 3 auf den Kopf des Absorbers 2 im Gegenstrom zu dem Feedgas aufgegeben. Das an sauren Gasen abgereicherte Gas verlässt den Absorber 2 über Kopf (Leitung 4). Das mit sauren Gasen angereicherte Absorptionsmittel verlässt den Absorber 2 am Boden über Leitung 5 und wird in den oberen Bereich der Hochdruck-Entspannungskolonne 6 eingeleitet, die im Allgemeinen bei einem Druck betrieben wird, der oberhalb des Partialdrucks der Sauergase des dem Absorber zugeführten Feedgases liegt. Die Entspannung des beladenen flüssigen Absorptionsmittels erfolgt im Allgemeinen mit Hilfe üblicher Vorrichtungen, beispielsweise eines Stand-Regelventils, einer hydraulischen Turbine oder einer umgekehrt laufenden Pumpe. Bei der Entspannung wird der größte Teil der gelösten nicht-sauren Gase sowie ein kleiner Teil der sauren Gase freigesetzt. Diese Gase werden über Leitung 7 aus der Hochdruck-Entspannungskolonne 6 über Kopf ausgeschleust.

Das Absorptionsmittel, das nach wie vor mit dem Großteil der sauren Gase beladen ist, verlässt die Hochdruck-Entspannungskolonne über Leitung 8 und wird je nach Bedarf mit der Pumpe 18 auf einen höheren Druck verdichtet und anschließend im Wärmetauscher 9 aufgeheizt. Durch den Wärmeeintrag kann ein Großteil der sauren Gase freigesetzt werden. Das aufgeheizte Absorptionsmittel wird in den oberen Bereich einer Entspannungskolonne 10 eingeleitet, die mit einer Füllkörperpackung ausgerüstet ist, um eine große Oberfläche zu erzielen und so die Freisetzung des Sauergases und die Einstellung des Gleichgewichts zu bewirken. Alternativ kann die Kolonne auch als Glocken-, Ventil- oder Siebboden-Kolonne ausgeführt sein. Die Entspannungskolonne 10 wird bei Drucken zwischen 5 und 30 bar betrieben. Bereits beim Eintritt in die Enspannungskolonne 10 wird ein Großteil des gelösten Sauergases freigesetzt. Weiteres Sauergas wird durch Strippen in der Kolonne praktisch vollständig freigesetzt. Das Absorptionsmittel wird auf diese Weise regeneriert. Am Kopf der Entspannungskolonne 10 ist ein Rückflusskühler 13 mit einem Auffangbehälter 12 vorgesehen, um die freigesetzten sauren Gase zu kühlen und einen Teil des Dampfes zu kondensieren. Die Hauptmenge des sauren Gases verlässt den Rückflusskühler 13 über Leitung 13. Das Kondensat wird mittels Pumpe 14 auf den Kopf der Entspannungskolonne 10 zurückgepumpt. Das regenerierte Absorptionsmittel, das nur noch einen geringen Teil des Sauergases enthält, verlässt die Entspannungskolonne 10 am Boden über Leitung 15 und wird zur Wärmerückgewinnung in den Wärmeaustauscher 9 gegeben und anschließend mittels Pumpe 16 über Leitung 3 auf den Kopf des Absorbers 2 aufgegeben. Um den Wärmeintrag in Entspannungskolonne 10 zu bewirken, wird ein Teil des regenerierten Absorptionsmittels vor Wärmetauscher 9 aus Leitung 15 abgezogen und in einen Aufkocher geleitet. Das dort erwärmte regenerierte Absorptionsmittel wird anschließend in den internen Teil der Entspannungskolonne 10 zurückgeführt.

Der Wärmerückgewinnung kommt bei diesem Verfahren eine besondere Bedeutung zu, da sich durch den gegenüber dem Stand der Technik erhöhten Betriebsdruck im Stripper höhere Sumpfablauftemperaturen einstellen, als dies üblicherweise der Fall ist. Dementsprechend größer ist auch die im Wärmeaustauscher 9 zurückgewinnbare Energie. Über Leitung 17 kann Frischwasser zum Ausgleich des mit den Gasen ausgetragenen Wassers eingespeist werden.

Die auf diese Weise gewonnenen Sauergasströme können, für den Fall, dass sie von Erdöl oder von einer aus einer Erdöllagerstätte stammenden Erdgas abgetrennt wurden, dazu genutzt werden, dass man das Sauergas in die Erdöllagerstätte zurückleitet. Dadurch wird die Ergiebigkeit der Eröllagerstätte erhöht.

Für den Fall, dass man die Sauergase durch Abtrennung von Verbrennungsgases gewonnen hat, kann das Sauergas aus Gründen des Klimaschutzes in unterirdische Lagerstätten geleitet oder in tiefe Wasserschichten in offenen Gewässern zu gelöst werden.

### Experimenteller Teil

### Beispiel 1

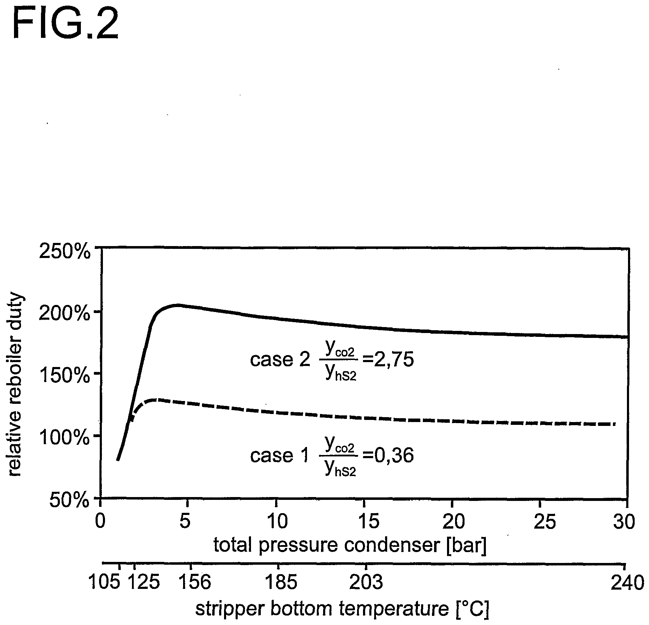

Es wurde eine Modellrechnung durchgeführt für die erfindungsgemäße Behandlung eines Gasstroms in einer Anlage gemäß Figur 1. Die wichtigsten Verfahrensparameter und die Zusammensetzung des Feedgas kann Tabelle 1 entnommen werden. Als flüssiges Absorptionsmittel wurde ein wässrige Lösung, enthaltend Methyldiethanolamin und Piperazin, eingesetzt. Das Ergebnis der Berechnung ist in Figur 2 wiedergegeben. Dort ist die erforderliche Leistung des Reboilers 19 (relative reboiler duty), die erforderlich ist, um das mit Sauergas beladene Absorptionsmittel auf einen definierten Wert zu verringern, gegen den Druck, der am Kopf der Entspannungskolonne 10 eingestellt wird (total pressure condenser) und die sich daraus ergebene Temperatur im Sumpf der Entspannungskolonne 10 (stripper bottom temperature), aufgetragen. Die Modellrechnung zeigt, dass für Druckbereiche ab 3 bar im Rahmen des Verfahrens keine zusätzliche Energie aufgewendet werden muss, um Sauergase mit einem hohen Druckniveau bereitzustellen. Darin unterscheidet sich das Verfahren grundsätzlich von den bekannten Verfahren, bei denen die Entspannung auf ein niedriges Druckniveau vorgenommen wird und die Druckerhöhung anschließend durch Kompressoren vorgenommen wird.

**Tabelle 1**

| Feedgasmenge [kmol/h] | 1194 |
|---|---|
| Feedgaszusammensetzung | |
| H₂O [%] | 0,005 |
| CO₂ [%] | 4,890 |
| H₂S [%] | 13,529 |
| C₂H₆ [%] | 4,420 |
| C₃H₈ [%] | 3,710 |
| N₂ [%] | 2,540 |
| CH₄ [%] | 70,907 |
| T Feedgas [°C] | 29 |
| p Feedgas [bara] | 60,71 |

### Beispiel 2 (zum Vergleich)

Die oben beschriebene Modellrechnung wurde wiederholt, wobei alle Parameter bis auf das Verhältnis von der CO₂- zur H₂S-Konzentration gleich gewählt wurden; dieses Verhältnis betrug hier 2,75.

Man erkennt, dass hier die Leistung des Reboilers bei Drücken von 10 bar und mehr auf einem hohen Niveau verharrt.

## Patentansprüche

1. Verfahren zur Gewinnung eines unter einem Druck von 5 bis 30 bar stehenden Sauergasstroms durch Entfernung der Sauergase aus einem Fluidstrom, der H₂S und ggf. andere Sauergase als Verunreinigungen enthält, wobei der molare Anteil an H₂S, bezogen auf die Gesamtmenge an Sauergasen mindestens 50 mol-% beträgt, indem man
a) in wenigstens einem Absorptionsschritt den Fluidstrom mit einem flüssigen, chemischen Absorptionsmittel ausgewählt aus der Gruppe bestehend aus
- Lösungen bestehend hauptsächlich aus aliphatischen oder cycloaliphatischen Aminen mit 2 bis 12 Kohlenstoffatomen, Alkanolaminen mit 2 bis 12 Kohlenstoffatomen, cyclischen Aminen, bei denen 1 oder 2 Stickstoffatome zusammen mit 1 oder 2 Alkandiylgruppen 5-, 6- oder 7-gliedrige Ringe bilden, Mischungen der vorstehenden Lösungen, wässrige Lösungen der vorstehenden Mischungen und Lösungen,
- wässrige Lösungen enthaltend Salze von Aminosäuren
- wässrige Pottaschelösungen, die ggf. Piperazin oder Monoethanolamin (MEA) enthalten
- wässrige NaOH-Lauge oder Kalkmilch
in innigen Kontakt bringt und so einen von Sauergasen weitgehend gereinigtenFluidstrom und ein mit Sauergasen beladenes flüssiges Absorptionsmittel erzeugt (Schritt a),
b) den von Sauergasen weitgehend gereinigten Fluidstrom und das mit Sauergasen beladene flüssige Absorptionsmittel voneinander trennt (Schritt b),
c) das mit Sauergasen beladene flüssige Absorptionsmittel durch Aufheizen und ggf. Entspannen oder Strippen in einen Sauergasstrom mit einem Druck von 5 bis 30 bar und ein regeneriertes flüssiges Absorptionsmittel auftrennt (Schritt c)
d) das regenerierte flüssige Absorptionsmittel in einen Wärmetauscher führt und dort abkühlt, indem man mit einem Teil seiner Wärmeenergie das mit Sauergasen beladene flüssige Absorptionsmittel in Schritt (c) aufheizt (Schritt d)
e) das regenerierte flüssige Absorptionsmittel in Schritt a) zurückführt (Schritt e).

2. Verfahren nach einem der vorstehenden Ansprüche, wobei man als Absorptionsmittel eine wässrige Lösung, enthaltend Methyldiethanolamin und Piperazin, einsetzt.

3. Verfahren nach einem der vorstehenden Ansprüche, wobei man in Schritt (a) ein flüssiges Absorptionsmittel einsetzt, das Wasser enthält und man Schritt (c) durchführt, indem man das aufgeheizte mit Sauergasen beladene flüssige Absorptionsmittel auf den Kopf einer Kolonne leitet und dort in der Kolonne im Gegenstrom zu einem Wasserdampfstrom zum Boden der Kolonne führt, und man den Wasserdampfstrom erzeugt, indem man das dort gebildet regenerierte flüssige Absorptionsmittel so weit erhitzt, dass das in dem zu regenerierenden flüssigen Absorptionsmittel enthaltene Wasser teilweise verdampft.

4. Verfahren nach einem der vorstehenden Ansprüche, wobei in Schritt (d) im Wärmetauscher die Temperaturdifferenz zwischen dem austretenden regenerierten flüssigen Absorptionsmittel und dem eintretenden beladenen flüssigen Absorptionsmittel 5 bis -100°K beträgt.

5. Verfahren nach einem der vorstehenden Ansprüche, wobei die Temperaturdifferenz zwischen dem in Schritt (a) in den Wärmetauscher eintretenden regenerierten flüssigen Absorptionsmittel und dem aus dem Wärmetauscher austretenden regenerierten flüssigen Absorptionsmittel 50 bis 200°K beträgt.

6. Verfahren nach einem der vorstehenden Ansprüche, wobei es sich bei den im Fluidstrom enthaltenden Sauergasen um eine Mischung handelt, die neben H₂S andere Sauergase, ausgewählt aus einer Gruppe bestehend aus CO₂, COS, Mercaptane SO₃, SO₂, CS₂ und HCN, enthält.

7. Verfahren nach Anspruch 6, wobei der Anteil von CO₂ an den sonstigen Sauergasen mindestens 50 mol-% beträgt.

8. Verfahren nach einem der vorstehenden Ansprüche, dass man den Sauergasstrom in unterirdische Lagerstätten leitet, in tiefen Wasserschichten von offenen Gewässern löst oder in Erdöllagerstätten leitet.

## Claims

1. A method for obtaining an acid gas stream having a pressure of from 5 to 30 bar by removal of the acid gases from a liquid stream comprising as impurities H₂S and optionally other acid gases, the molar fraction of H₂S, based on the total amount of acid gases, being at least 50 mol%, which comprises
a) in at least one absorption step, bringing the fluid stream into intimate contact with a liquid chemical absorption medium selected from the group consisting of
- solutions consisting principally of aliphatic or cycloaliphatic amines having from 2 to 12 carbon atoms, alkanolamines having from 2 to 12 carbon atoms, cyclic amines where 1 or 2 nitrogen atoms, together with 1 or 2 alkanediyl groups, form 5-, 6- or 7-membered rings, mixtures of the abovementioned solutions, aqueous solutions of the abovementioned mixtures and solutions,
- aqueous solutions comprising salts of amino acids
- aqueous potash solutions which optionally comprise piperazine or monoethanolamine (MEA)
- aqueous NaOH solution or milk of lime,
and thus producing a fluid stream substantially freed from acid gases and an acid-gas-loaded liquid absorption medium (step a),
b) separating from one another the fluid stream substantially freed from acid gases and the acid-gas-loaded liquid absorption medium (step b),
c) separating, by heating and optionally expansion or stripping, the acid-gas-loaded liquid absorption medium into an acid gas stream having a pressure of from 5 to 30 bar and a regenerated liquid absorption medium (step c)
d) passing the regenerated liquid absorption medium into a heat exchanger and cooling it there, by using a part of its thermal energy to heat up the acid-gas-loaded liquid absorption medium in step (c) (step d)
e) recirculating the regenerated liquid absorption medium to step a) (step e).

2. The process according to one of the preceding claims, wherein, as ansorption medium, use is made of an aqueous solution comprising methyldiethanolamine and piperazine.

3. The process according to one of the preceding claims, wherein, in step (a) a liquid absorption medium is used which comprises water and step (c) is carried out by passing the heated acid-gas-loaded liquid absorption medium to the top of a column and conducting it there to the bottom of the column in countercurrent flow to a steam stream in the column, and producing a steam stream by heating the regenerated liquid absorption medium formed there to the extent that the water present in the liquid absorption medium to be regenerated vaporizes in part.

4. The process according to one of the preceding claims, wherein, in step (d), in the heat exchanger the temperature difference between the exiting regenerated liquid absorption medium and the incoming loaded liquid absorption medium is from 5 to -100°K.

5. The process according to one of the preceding claims, wherein the temperature difference between the regenerated liquid absorption medium which is incoming in step (a) to the heat exchanger and the regenerated liquid absorption medium exiting from the heat exchanger is from 50 to 200°K.

6. The process according to one of the preceding claims, wherein the acid gases present in the fluid stream are a mixture which comprises, in addition to H₂S, other acid gases selected from a group consisting of CO₂, COS, mercaptans, SO₃, SO₂, CS₂ and HCN.

7. The process as claimed in claim 6, wherein the CO₂ fraction of the other acid gases is at least 50 mol%.

8. The process according to one of the preceding claims, that the acid gas stream is passed into underground seams, is dissolved in deep water layers of open bodies of water or is passed into crude oil deposits.

## Revendications

1. Procédé pour la production d'un flux de gaz acides se trouvant sous une pression de 5 à 30 bars par élimination des gaz acides à partir d'un flux fluide, qui contient du H₂S et le cas échéant d'autres gaz acides comme impuretés, la proportion molaire de H₂S, par rapport à la quantité totale des gaz acides, étant d'au moins 50% en mole, en ce que
a) dans au moins une étape d'absorption, on met en contact intime le flux fluide avec un agent d'absorption liquide, chimique, choisi dans le groupe constitué par
- des solutions constituées principalement par des amines aliphatiques ou cycloaliphatiques comprenant 2 à 12 atomes de carbone, des alcanolamines comprenant 2 à 12 atomes de carbone, des amines cycliques, dans lesquelles 1 ou 2 atomes d'azote forment, conjointement avec 1 ou 2 groupes alcanediyle, des cycles de 5, 6 ou 7 chaînons, des mélanges des solutions susmentionnées, des solutions aqueuses des mélanges et des solutions susmentionnés,
- des solutions aqueuses contenant des sels d'acides aminés,
- des solutions aqueuses de potasse qui contiennent le cas échéant de la pipérazine ou de la monoéthanolamine (MEA)
- de la lessive aqueuse de NaOH ou du lait de chaux
et on obtient ainsi un flux fluide dans une large mesure purifié des gaz acides et un agent d'absorption liquide chargé des gaz acides (étape a),
b) on sépare le flux fluide dans une large mesure purifié des gaz acides et l'agent d'absorption liquide chargé des gaz acides l'un de l'autre (étape b),
c) on sépare l'agent d'absorption liquide chargé des gaz acides par chauffage et le cas échéant détente ou rectification en un flux de gaz acides présentant une pression de 5 à 30 bars et en un agent d'absorption liquide régénéré (étape c),
d) on guide l'agent d'absorption liquide régénéré dans un échangeur thermique et on l'y refroidit en ce qu'on chauffe, à l'aide d'une partie de son énergie thermique, l'agent d'absorption liquide chargé de gaz acides dans l'étape (c) (étape d),
e) on recycle l'agent d'absorption liquide régénéré dans l'étape a) (étape e).

2. Procédé selon l'une quelconque des revendications précédentes, une solution aqueuse contenant de la méthyldiéthanolamine et de la pipérazine étant utilisée comme agent d'absorption.

3. Procédé selon l'une quelconque des revendications précédentes, dans l'étape (a), un agent d'absorption liquide étant utilisé qui contient de l'eau et l'étape (c) étant effectuée en ce qu'on guide l'agent d'absorption liquide, chargé des gaz acides, chauffé en tête d'une colonne et on le guide dans la colonne à contre-courant par rapport à un flux de vapeur d'eau vers le fond de la colonne et le flux de vapeur d'eau étant produit en ce qu'on chauffe l'agent d'absorption liquide régénéré qui y est formé à un niveau tel que l'eau contenue dans l'agent d'absorption liquide régénéré s'évapore partiellement.

4. Procédé selon l'une quelconque des revendications précédentes, dans l'étape (d), la différence de température dans l'échangeur thermique entre l'agent d'absorption liquide régénéré qui sort et l'agent d'absorption liquide chargé qui entre étant de 5 à -100°K.

5. Procédé selon l'une quelconque des revendications précédentes, dans l'étape (a), la différence de température entre l'agent d'absorption liquide régénéré entrant dans l'échangeur thermique et l'agent d'absorption liquide régénéré qui sort de l'échangeur thermique étant de 50 à 200°K.

6. Procédé selon l'une quelconque des revendications précédentes, les gaz acides contenus dans le flux de fluide étant un mélange qui contient, outre du H₂S, d'autres gaz acides choisis dans un groupe constitué par CO₂, COS, des mercaptans, SO₃, SO₂, CS₂ et HCN.

7. Procédé selon la revendication 6, la proportion de CO₂ par rapport aux autres gaz acides représentant au moins 50% en mole.

8. Procédé selon l'une quelconque des revendications précédentes, en ce que le flux de gaz acides est guidé dans des gisements souterrains, dissous dans les eaux profondes des eaux libres ou guidé dans des gisements de pétrole.
